# FASCICULE DE BREVET EUROPEEN

(11) **EP 1 849 743 B1**
(45) Date de publication et mention de la délivrance du brevet: **03.09.2008**
(21) Numéro de dépôt: 07300915.1
(22) Date de dépôt: 02.04.2007
(51) Int. Cl.: B66D 1/58

(54) **Dispositif compensateur de charge, notamment pour engin de levage**
Lastenausgleichsvorrichtung, insbesondere für Hebezeuge
Load compensation device, in particular for a lifting device

(30) Priorité: 25.04.2006 FR 0651462
(43) Date de publication de la demande: 31.10.2007
(73) Titulaire: REEL, 69450 Saint Cyr au Mont d'Or (FR)
(72) Inventeur: Jullien, Michel, 69480 Lucenay (FR)
(74) Mandataire: Vuillermoz, Bruno

(56) Documents cités:
- EP-A1- 1 028 084
- FR-A1- 2 753 188

## Description

### DOMAINE DE L'INVENTION

La présente invention concerne, de manière générale, des engins de levage et de manutention, et plus particulièrement un dispositif dénommé compensateur de charge, destiné à optimiser le fonctionnement de tels engins de levage.

L'invention trouve plus particulièrement son application dans le domaine des réacteurs nucléaires, notamment mis en oeuvre dans les centrales de production d'électricité, pour la manutention des assemblages de combustibles nucléaires.

### ETAT ANTERIEUR DE LA TECHNIQUE

Il est bien connu, dans le domaine des engins de levage et de manutention, et plus particulièrement des ponts roulants, de mettre en oeuvre un dispositif compensateur de charges. Dans ce cadre particulier, l'une des extrémités du ou des câbles assurant le levage vient s'enrouler sur le tambour rotatif d'un treuil, l'autre extrémité du ou desdits câbles est solidarisée au chariot dudit engin de levage.

Entre ces deux extrémités, le ou les câbles s'enroulent autour d'une poulie folle montée en rotation au dessus du point de solidarisation du chariot, et autour d'une poulie folle d'un moufle mobile à crochet, auquel la charge est accrochée, par exemple au moyen d'un grappin.

Entre la poulie folle et le moufle, on insert un peson associé à des moyens propres à induire l'arrêt de la commande de rotation du tambour, si le ou les câbles sont soumis à une surcharge, ou au contraire à une sous charge.

La surcharge intervient si lors de son élévation, la charge en question accroche un obstacle, tandis que la sous-charge se produit si la charge butte contre un obstacle lors de sa descente.

Dans le domaine des réacteurs nucléaires, il convient de procéder à des réaménagements périodiques du coeur du réacteur, constitué d'un certain nombre d'assemblages de combustibles nucléaires mis en place au niveau d'un sommier également dénommé plaque de coeur, au fond de la cuve du réacteur.

En effet, après une certaine durée de fonctionnement, les assemblages du coeur du réacteur, généralement les plus anciens et les plus irradiés, placés sensiblement en zone centrale du coeur, sont ôtés de celui-ci, et les assemblages périphériques sont progressivement centralisés au niveau du coeur. Corollairement, des assemblages neufs sont positionnés à la périphérie.

Lorsque les assemblages en question sont neufs, ils se présentent de façon rectiligne, et partant n'engendrent pas de difficultés particulières quant à leur manipulation ou à leur mise en place au sein de la plaque de coeur.

En revanche, après une certaine période d'irradiations, on observe que lesdits assemblages présentent différents types de déformation, tels que notamment des vrillages, des déformations en arc de cercle, ou *« banane* », des flambages, ces déformations tendant à augmenter fortement avec la durée ou le degré d'irradiation et induisant de fait des difficultés croissantes lors de la mise en place des assemblages au sein du coeur, ou lors de leur extraction hors de celui-ci.

Compte tenu des déformations ainsi engendrées au niveau des assemblages après un ou plusieurs cycles d'exploitation, leur réinsertion dans d'autres sites du coeur au niveau de la plaque de coeur peut poser des problèmes, notamment en raison des interférences en volume avec les assemblages voisins.

Traditionnellement, le chargement du coeur du réacteur s'effectue depuis le niveau supérieur d'une piscine noyant le coeur, au moyen d'une machine dite de chargement, susceptible de se déplacer au-dessus de ladite piscine a l'instar d'un pont roulant. L'un des problèmes majeurs auquel sont confrontés les exploitants de telles centrales nucléaires résident dans les périodes relativement longues nécessaires au changement d'un coeur de réacteur, compte tenu de la multiplicité des opérations à réaliser.

Il n'est pas rare en effet que le changement d'un coeur de réacteur ou son réaménagement nécessite l'arrêt de la centrale pendant une période de plusieurs semaines, limitant d'autant la production d'énergie électrique, et corollairement, la rentabilité d'une telle centrale.

Cette durée, liée au chargement et au déchargement du réacteur, est inhérente, non seulement à la manipulation proprement dite des assemblages de combustible, mais également à leur positionnement sur la plaque de coeur. On conçoit dès lors la nécessité de disposer d'un moyen de levage et de manutention qui soit, tout à la fois, efficace, rapide, tout en s'affranchissant sinon en limitant les risques inhérents aux interactions en volume des assemblages entre eux, lors de ces opérations de chargement et de déchargement.

Il est en outre rappelé que, de manière générale, les assemblages de combustible nucléaire sont constitués de crayons, comportant un empilement de pastilles frittées du combustible proprement dit, ces crayons étant assemblés entre eux au moyen de grilles - entretoises, réparties selon la hauteur de l'assemblage.

Dans le cadre d'une opération de levage, c'est-à-dire d'enlèvement ou de repositionnement d'un assemblage, l'accrochage des assemblages entre eux se matérialise par une surcharge au niveau de l'engin de levage, et notamment du ou des câbles, qui doit être immédiatement détectée afin d'induire l'arrêt du moteur du treuil de la machine de chargement.

En effet, dans l'hypothèse où une telle surcharge n'est pas détectée ou dans celle où l'arrêt du moteur du treuil est trop long à intervenir, les grilles des assemblages accrochés sont susceptibles de se détériorer et la cohésion de l'assemblage lui-même risque d'en souffrir, avec des conséquences rédhibitoires susceptibles d'en découler : libération des crayons, nécessité de les récupérer dans une atmosphère tout particulièrement hostile, etc...

Le même phénomène est susceptible d'intervenir en cas de mise en place d'un assemblage au sein d'un coeur, à la réserve près que la surcharge se transforme en sous charge, de sorte que la tension du ou des câbles diminue, n'assurant plus le positionnement de l'assemblage selon une position verticale.

Afin de pallier, ces inconvénients, il a été proposé par exemple dans le document EP-A-0 292 413 un compensateur de charge destiné à venir se positionner au niveau du chariot de la machine de chargement.

Un tel dispositif comporte fondamentalement :
- une armature fixe, solidaire du chariot, et comportant deux butées extrêmes ;
- un coulisseau destiné à coulisser au sein de l'armature entre ces butées extrêmes ;
- une cloche extérieure pourvue de moyens propres à coopérer avec le coulisseau ;
- un vérin de surcharge, disposé entre le coulisseau et l'armature, notamment l'une des butées extrêmes ;
- un vérin de sous-charge disposé entre le coulisseau et la cloche extérieure ;
- un système de contrepoids passif, constitué d'une masse définie, permettant de limiter à tout moment l'effort appliqué sur l'assemblage lors de la pose de celui-ci.

L'extrémité du ou des câbles de l'engin de levage est fixée directement ou indirectement à la cloche extérieure.

Par ailleurs, un circuit électro-pneumatique d'alimentation modulé des vérins est prévu et agit en fonction des variations de charges détectées. Celles-ci sont détectées au moyen d'un peson, qui, en fonction d'un seuil préalablement déterminé et réglé, induit la mise sous pression desdits vérins, respectivement de sous-charge et/ou de surcharge, selon des valeurs discrètes.

On a également proposé, dans le document FR-A-2 753 188, qui divulgue un dispositif selon le préambule de la revendication 1, une optimisation de ce dispositif dans lequel le pilotage de la pression au sein des vérins respectifs s'effectue de manière continue.

Si certes, ce dispositif fonctionne de manière satisfaisante, la recherche permanente de rationalisation de l'exploitation de telles centrales nucléaires a conduit à une volonté de diminuer la durée d'arrêt des tranches des coeurs de réacteur, et pour ce faire, a préconisé une augmentation des vitesses de levage. Typiquement, les vitesses de levage requises ont largement augmenté par rapport aux contraintes fixées lors du développement du compensateur de charge précédemment décrit.

Au surplus, les charges elles-mêmes ont été modifiées, et notamment ont été augmentées, avec au surplus, la mise en oeuvre de masse variable, fonction des outils susceptibles d'être rapportés sur le grappin de chargement, situé à l'extrémité du ou des câbles.

L'expérience démontre que la mise en oeuvre de tels compensateurs de charge à fonctionnement pneumatique s'avère inadapté au vu de l'évolution des caractéristiques dynamiques de l'environnement dans lequel il est destiné à être mis en oeuvre, et ne permet pas de considérer différents seuils en fonction des charges mises en oeuvre.

L'objet de la présente invention est donc de pallier ces inconvénients, et de proposer un système compensateur de charge permettant d'augmenter les vitesses et les masses initialement mises en oeuvre dans le cadre des techniques antérieures, et corollairement, de pouvoir fixer différents seuils de déclenchement de l'actionnement dudit compensateur de charge, tout en optimisant les conditions d'exploitation et de sécurité.

### EXPOSE DE L'INVENTION

L'invention concerne un dispositif compensateur de charge, notamment pour engins de levage, comprenant des moyens aptes à détecter une surcharge ou une sous-charge, destinés à induire l'actionnement dudit dispositif.

Ce dispositif compensateur de charge comporte un actionneur, solidarisé à l'une des extrémités du ou des câbles portant la charge, susceptible d'engendrer un déplacement positif ou négatif desdits câbles sur une distance faible au regard de la longueur du ou des câbles, et fonctionnant au moyen d'un moteur électrique brushless ou « sans balais », lui-même connecté au moyen de détection de surcharge ou de sous-charge.

En d'autres termes, l'invention consiste principalement à ne plus faire appel à la mise en oeuvre de moyens pneumatiques inadaptés en raison des vitesses dorénavant imposées notamment par les exploitants de centrales nucléaires, mais à les remplacer par un actionneur électrique qui présente l'avantage de proposer un temps de réponse court et une grande capacité d'accélération.

A cet effet, cet actionneur électrique linéaire comporte un moteur brushless, un réducteur et une vis sans fin, notamment à billes ou à rouleaux.

Selon une première version de l'invention, cet actionneur linéaire comporte un vérin électrique à vis à billes actionné par un tel moteur brushless.

Selon une autre forme de réalisation de l'invention, l'actionneur linéaire est constitué d'un élément rotatif du type moteur couple, ledit moteur étant également de type brushless, associé à un réducteur et à une bielle afin d'obtenir le mouvement de translation recherché.

### BREVE DESCRIPTION DES DESSINS

La manière dont l'invention peut être réalisée et les avantages qui en découlent ressortiront mieux des exemples de réalisation qui suivent, donnés à titre indicatif et non limitatif à l'appui des figures annexées.
La figure 1 est une représentation schématique d'un dispositif de l'état antérieur de la technique.
La figure 2 est une représentation schématique de la chaîne cinématique du dispositif conforme à l'invention..
Les figures 3, 3a et 3b sont des représentations schématiques du compensateur selon une première forme de réalisation de l'invention, la figure 3a représentant le compensateur en surcharge et la figure 3b en sous-charge.
Les figures 4a et 4b sont des représentations schématiques du compensateur selon une seconde forme de réalisation de l'invention, la figure 4a représentant le compensateur en surcharge et la figure 4b en sous-charge.
La figure 5 est un double graphe illustrant l'évolution de la vitesse et de la position du compensateur en fonction du temps à partir de la détection d'un défaut.

### DESCRIPTION DETAILLEE DE L'INVENTION

La description qui suit est plus particulièrement dirigée vers le domaine des réacteurs nucléaires. Il doit cependant être bien entendu que cette application n'est nullement limitative, et que d'autres applications de la présente invention sont envisageables, le dispositif compensateur en question étant susceptible d'être mis en oeuvre avec tout système de levage ou de manutention.

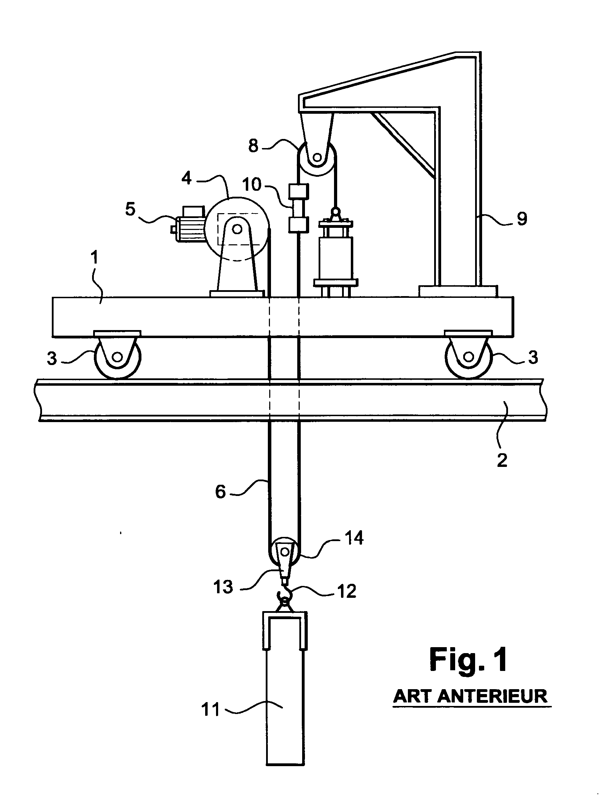

Selon la figure 1, le chariot (1) d'une machine de chargement d'assemblages de combustible nucléaire au sein d'un réacteur de centrale nucléaire est représenté. Ce chariot (1) se déplace sur un chemin de roulement (2) au moyen de galets (3). Ce chariot comporte un engin de levage constitué en l'espèce d'un treuil (4) motorisé (5), sur lequel vient s'enrouler un ou plusieurs câbles (6). L'autre extrémité du câble (6) est fixée sur un dispositif compensateur de charge (7), également solidaire du chariot (1).

En l'espèce, le câble (6) entoure une poulie montée folle en rotation (8) sur une potence solidaire du chariot (1).

Ce câble coopère avec un peson (10) du type dynamométrique à jauge de contrainte, et raccordé à un indicateur de poids, les informations relatives au poids étant transmises à un automate programmable (non représenté) gérant la machine de chargement.

La charge (11), en l'espèce un assemblage de combustible nucléaire, est accrochée à un crochet (12) d'un moufle mobile (13), dont la poulie (14) est entourée par le ou les câbles (6) avant que ceux-ci n'aillent s'entourer sur le tambour du treuil (4).

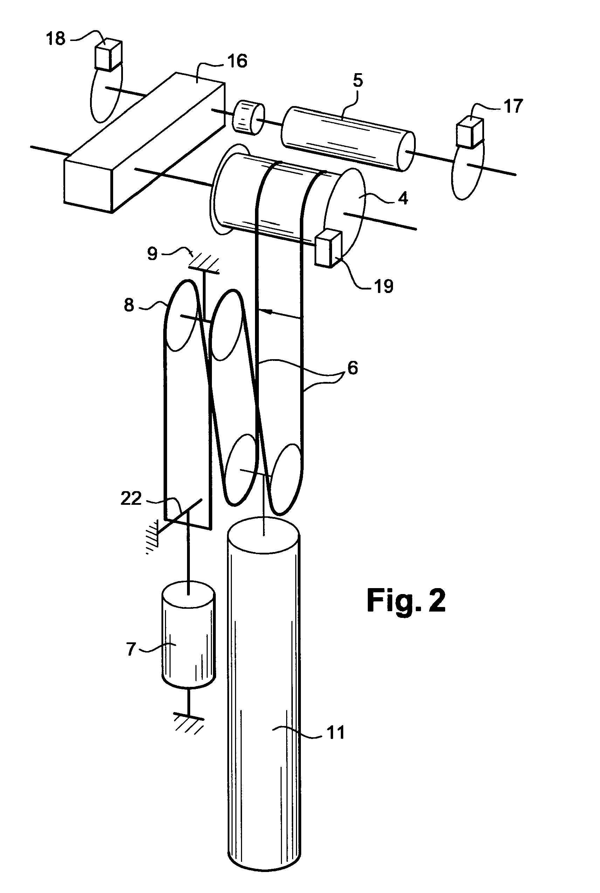

On a illustré en relation avec la figure 2 de manière plus détaillée la chaîne cinématique mise en oeuvre.

Ainsi, outre les différents éléments décrits en relation avec les figures 1 de l'état antérieur de la technique, il est précisé qu'en fait, le moteur (5) assurant la rotation du tambour sur lequel vien(nen)t s'enrouler le ou les câbles (6), est accouplé à celui-ci par l'intermédiaire d'un organe de couplage (15) lui-même accouplé à un réducteur (16).

Au surplus, ce treuil comporte par exemple un triple système de freinage, respectivement un frein opérationnel (17) agissant directement sur l'axe moteur du moteur (5), un freinage auxiliaire (18) agissant également sur l'axe du moteur (5), et un système de freinage de sécurité (19) agissant sur le tambour directement.

Selon l'invention, le compensateur de charge est constitué d'un actionneur linéaire lui-même actionné par un moteur électrique brushless.

Ainsi, dans une première forme de réalisation illustrée au niveau des différentes figures (3), ce compensateur comporte un vérin électrique (20), dont le moteur électrique brushless (21) actionne une vis à bille (non représentée) solidarisée au(x) câble(s) par une liaison mécanique.

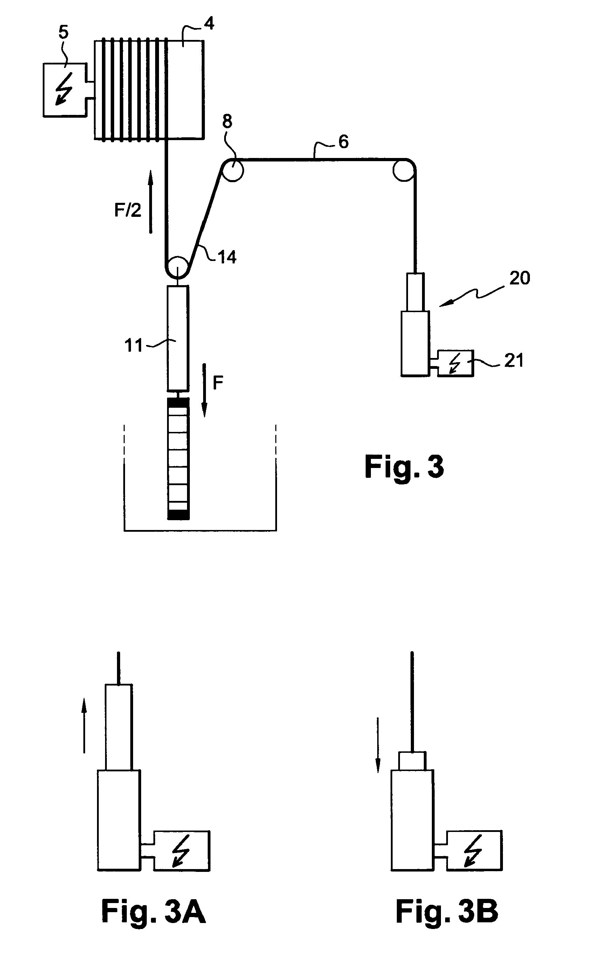

La course du compensateur par rapport à sa position d'équilibre, illustrée à la figure 3, est dans l'exemple décrit de 50 mm, respectivement en positif ou en négatif en fonction de son actionnement en surcharge (figure 3a) ou en sous-charge (figure 3b). En d'autres termes, la course totale du compensateur est de 100 mm dans l'exemple décrit.

Dans ce même exemple, et tel qu'on peut l'observer, le ou les câbles (6) sont solidarisés à l'extrémité libre du compensateur soit directement, soit indirectement au moyen d'un système d'équilibrage des charges (22) illustré sur la figure 2.

Le moteur brushless est lui-même connecté avec un moyen de détection de défauts. Plus spécifiquement, le moteur proprement dit est piloté par un variateur, lui-même recevant les signaux de commande du moyen de détection de défauts. Ce moyen de détection est soit constitué d'un peson, du type de celui mentionné en relation avec l'état antérieur de la technique, soit tout autre type de capteur de pesage, et notamment de tension au niveau du câble. Ce capteur peut également être constitué d'un capteur de traction, de compression ou autres.

Bien évidemment, ce détecteur est également connecté au moteur (5) assurant la rotation du tambour (4) pour que lorsqu'une tension excède un seuil déterminé (défini plus en détail ultérieurement), ou au contraire qu'une sous-tension est détectée, cette détection engendre simultanément l'arrêt du tambour (4) et la mise en oeuvre du compensateur de l'invention (20) et (21). Corollairement, le variateur du moteur brushless du compensateur est lui-même connecté au système de contrôle commande du treuil.

Dans cette première forme de réalisation, on peut mettre en oeuvre comme vérin électrique une servo-presse électrique du type par exemple commercialisé par la société PROMESS. Celle-ci peut intégrer directement un capteur de force, permettant ainsi d'obtenir une redondance au niveau de la détection de défaut, en addition au capteur de pesage associé au câble.

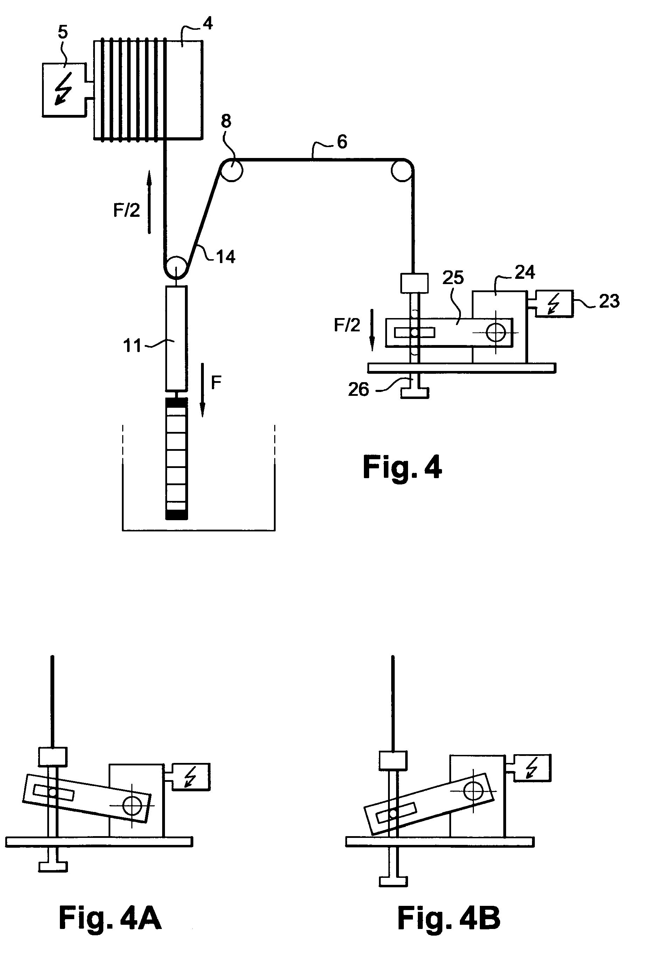

Dans une autre forme de réalisation de l'invention représentée en figures 4, 4a, 4b, le principe de l'invention demeure le même, à savoir la mise en oeuvre d'un moteur brushless, ici constitué d'un moteur - couple (23) actionnant un réducteur (24), entraînant à son tour la rotation d'une bielle (25), dont l'extrémité libre coopère avec un bras (26). Le ou les câbles (6) sont solidarisés à l'extrémité libre de ce bras de telle sorte à transformer le mouvement de rotation de la bielle en un mouvement de translation, toujours bien évidemment pour assurer la compensation.

Au surplus et avantageusement, le compensateur de l'invention est muni d'un dispositif de sécurité du type frein à manque de courant agissant directement sur le moteur brushless.

Un tel moteur brushless est paramétrable au moyen d'un variateur. Ce faisant, il est possible de définir un certain nombre de seuils en termes de détection, et corollairement en termes d'actionnement du compensateur de charge de l'invention.

Dans l'application plus particulière du domaine des machines de levage des réacteurs nucléaires, il est assigné au compensateur de charge trois fonctions différentes.

Tout d'abord, la fonction contrepoids, rendue possible par la mise en oeuvre du moteur brushless. Celle-ci est mise en oeuvre lors de l'accostage du grappin de préhension situé à l'extrémité du ou des câbles (6) sur l'assemblage de combustible, ou lors de la pose de l'assemblage du combustible sur la plaque de coeur, de telle sorte à limiter l'effort appliqué sur la tête d'assemblage à une charge maximum, et ainsi éviter d'endommager l'assemblage en question.

Il lui est également assigné une fonction de compensation en zone supérieure, c'est-à-dire dans la zone voisine du lieu de positionnement de l'extrémité supérieure des assemblages de combustible lorsqu'ils sont en place sur le coeur du réacteur, et une zone d'approche correspondant à la zone inférieure du lieu de positionnement normal des assemblages au niveau de la plaque de coeur, et ce afin de limiter également les efforts dues aux interactions et aux interférences entre la tête et les pieds de l'assemblage.

Enfin, il lui est également assigné une fonction de compensation au niveau de la zone médiane, c'est à dire la zone séparant les deux zones précédentes, pour limiter les efforts dues aux interactions entre les grilles des différents assemblages de combustible.

On peut moduler à l'aide de différents programmes de fonctionnement du variateur du moteur brushless du compensateur, les différents seuils de déclenchement de la mise en oeuvre dudit compensateur en relation avec l'altimétrie des séquences de levage.

Ainsi, lorsqu'une surcharge est détectée, en principe lors d'un mouvement de montée des câbles donc de l'assemblage, le compensateur va induire un déplacement correspondant à la longueur de câble enroulée par le tambour (4) le temps que celui-ci s'arrête. En d'autres termes, le compensateur va libérer du câble.

Corollairement, en cas de sous-charge, notamment lors d'un mouvement de descente de l'assemblage de combustible, le compensateur va récupérer la longueur de câble déroulée par le treuil le temps que celui-ci s'arrête.

Afin d'aboutir à ce résultat, on met en oeuvre deux types de régulation, tout d'abord, une régulation en termes d'effort.

En effet, le compensateur est destiné à réguler les efforts appliqués sur la charge, et en l'espèce l'assemblage du combustible, aussi bien en mouvement de montée qu'en descente.

En l'espèce, tant que l'effort, donc la charge ou la tension du câble est comprise dans une enveloppe précise, le compensateur reste en position équilibrée et continue sa surveillance.

Lorsqu'en revanche, l'effort sort de l'enveloppe, c'est-à-dire en cas de détection de défaut (surcharge ou sous-charge), la régulation de l'effort commence. Corollairement, une fois la détection d'un défaut réalisé, l'ordre de stopper le mouvement de levage ou de descente est donné au treuil. Ainsi lors du mouvement de descente du treuil à vide, c'est-à-dire en l'absence de charge, seule la fonction contrepoids est active, puisque l'on vient accoster les accessoires de levage (mât, grappin et éventuellement outil particulier) sur l'assemblage de combustible.

Dans cette configuration, l'effort vu par le compensateur correspond à une consigne déterminée, définie comme représentant la moitié du poids des accessoires de levage.

Cet effort est variable, car le nombre des accessoires de levage et de manutention n'est pas constant, et il peut adopter différents seuils, en fonction du nombre d'outils qu'il est destiné à porter, outre de la nature ou de l'origine des assemblages. En effet, il convient de rappeler que les assemblages n'ont pas tous la même origine, et que leur masse n'est donc pas constante.

Ces seuils sont déterminés une nouvelle fois par introduction des paramètres au système de commande du moteur brushless. Ainsi, à chaque type de configuration de la charge correspond un programme de régulation. Ces programmes sont stockés dans la mémoire associée au variateur du compensateur, et sont appelés par l'automate de la machine de chargement, qui connaît la configuration de la charge.

Lors du mouvement de montée du treuil avec un assemblage de combustible, dans la zone d'approche, la fonction contrepoids est toujours activée et répond aux mêmes exigences en termes d'effort que précédemment.

Une fois la charge complète, c'est-à-dire assemblage de combustible + éventuellement outil tendu sur les câbles, la fonction compensateur dans la zone supérieure et la zone d'approche est activée. Dans cette configuration, l'effort vu par le compensateur correspond à la consigne définie comme représentant la moitié du poids des accessoires de levage et la moitié du poids de l'assemblage de combustible.

Là encore, en fonction du type de combustible mis en oeuvre, pas nécessairement uniforme, l'effort peut adopter plusieurs valeurs, et les seuils correspondants peuvent être régulés grâce au variateur associé au moteur bushless du compensateur.

En revanche, dans la zone intermédiaire, la fonction contrepoids est remplacée uniquement par la fonction compensateur, le seuil de déclenchement du compensateur correspondant à la consigne précédemment indiquée.

Dans le cadre du mouvement de descente du treuil muni d'un assemblage de combustible, les fonctions du compensateur par rapport à ce qui a été décrit sont simplement inversées par rapport à la montée, le fonctionnement demeurant identique.

On peut procéder à une régulation en position. En effet, une fois la détection d'un défaut réalisé, et ainsi que déjà dit, l'ordre de stopper le mouvement de levage ou de descente est donné au treuil, et l'ordre de compenser l'enroulement ou le déroulement du ou des câbles est donné au compensateur. Dans ce type de régulation, celle-ci est réalisée par rapport à l'information issue d'un codeur absolu, donnant l'évolution de la position du tambour (4) du treuil, donc directement en corrélation avec la quantité d'enroulement ou de déroulement du câble.

Ainsi que déjà mentionné, la quantité de câble enroulé ou déroulé par le tambour (4) est respectivement libérée ou récupérée par le compensateur.

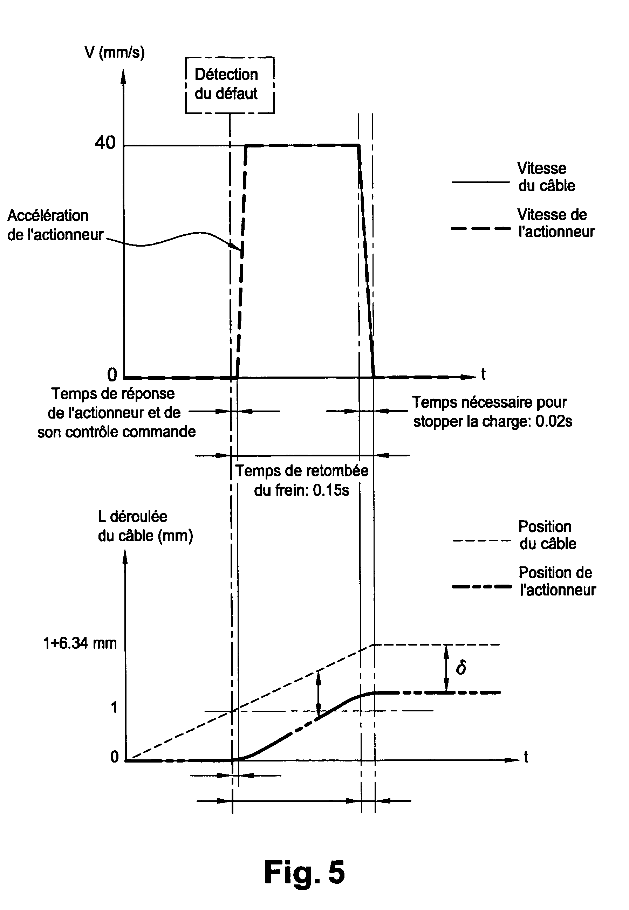

On a illustré en relation avec la figure 5 deux graphes, respectivement de variation de la vitesse de compensation en fonction du temps, et de la longueur du déroulé du câble, également en fonction du temps.

On observe ainsi dans le premier d'entre eux, que lors de la détection d'un défaut, l'actionneur constitutif du compensateur subit une accélération immédiate, pour induire son déplacement (2^{ème} graphe) jusqu'à atteindre le temps de freinage effectif du tambour du treuil.

La gestion de ce compensateur est assurée au moyen d'un PC ou de tout système équivalent.

On conçoit que la mise en oeuvre d'un tel dispositif de compensation de charge permet d'augmenter significativement les conditions d'opérations d'un engin de levage.

En effet, les vitesses de levage peuvent être significativement augmentées.

Les charges également sont susceptibles d'être nettement plus importantes que celles possibles avec le dispositif de l'art antérieur précédemment décrit, pour lequel on était rapidement limité à des charges de l'ordre de 1,5 t.

Au surplus, de par la mise en oeuvre d'un moteur brushless associé à son variateur, on aboutit à la possibilité d'intégrer différents types de seuil, et donc d'affecter au compensateur différentes consignes, fonction de la configuration de fonctionnement de l'engin de levage.

De par l'augmentation significative des vitesses de levage, on diminue ainsi corollairement la durée des arrêts des tranches des centrales pour assurer la maintenance, et notamment les changements du coeur de réacteur, et donc on optimise la rentabilité de ces centrales.

Enfin, en raison même de son mode de fonctionnement, le compensateur selon l'invention peut être limitativement mis en oeuvre avec pour seule fonction la fonction contrepoids. A cet effet, le variateur du moteur brushless reçoit une consigne particulière en relation avec le seuil d'effort qui lui est assigné. Dans ce cas là le(s) seuil(s) dit de « contrepoids est activé sur une course de levage spécifique pour limiter l'effort appliqué, notamment sur la tête de l'assemblage, à une charge maximum, et ainsi éviter d'endommager l'assemblage combustible. En outre, le ou les capteurs (10) sont neutralisés.

## Revendications

1. Dispositif compensateur de charge, notamment pour engins de levage, comprenant des moyens aptes à détecter une surcharge ou une sous-charge, destinés à induire l'actionnement dudit dispositif, comportant un actionneur (20), solidarisé à l'une des extrémités du ou des câbles (6) portant la charge (11), susceptible d'engendrer un déplacement positif ou négatif desdits câbles sur une distance faible au regard de la longueur du ou des câbles, **caractérisé en ce que** l'actionneur (20) fonctionne au moyen d'un moteur électrique brushless (21) associé à un variateur, lui-même connecté au moyen de détection de surcharge ou de sous-charge.

2. Dispositif compensateur de charge selon la revendication 1, ***caractérisé* en ce que** l'actionneur est linéaire et est constitué d'un vérin électrique à vis à billes actionné par le moteur brushless.

3. Dispositif compensateur de charge selon la revendication 1, ***caractérisé* en ce que** l'actionneur est constitué d'un élément rotatif du type moteur couple, ledit moteur étant de type brushless, associé à un réducteur et à une bielle, ladite bielle coopérant avec un bras linéaire à l'extrémité libre duquel sont solidarisés le ou les câbles (6).

4. Dispositif compensateur de charge selon l'une des revendications 1 à 3, ***caractérisé* en ce qu'**il ne fonctionne qu'en mode contrepoids, le variateur du moteur brushless recevant une consigne particulière en relation avec le seuil d'effort qui lui est assigné, et les moyens aptes à détecter une surcharge ou une sous-charge étant neutralisés.

5. Machine de chargement pour réacteur de centrale nucléaire, comprenant un chariot (1) susceptible de se déplace sur un chemin de roulement (2) situé au dessus du coeur du réacteur, et comportant un engin de levage constitué d'un treuil (4) motorisé (5), sur lequel vient s'enrouler un ou plusieurs câbles (6) de levage, dont l'autre ou les autres extrémités est ou sont fixée(s) sur un dispositif compensateur de charge selon l'une des revendications 1 à 4.

## Claims

1. A load compensating device, especially for lifting appliances, comprising means suitable for detecting an overloaded or an underload designed to cause actuation of said device, ***characterised* in that** it comprises an actuator attached to one of the ends of rope or ropes (6) supporting load (11) capable of producing positive or negative displacement of said ropes over a short distance compared with the length of the rope or ropes and operating by means of brushless electric motor (21) associated with an infinitely variable-speed transmission which is itself connected to the means of detecting an overload or underload.

2. A load compensating device as claimed in claim 1, ***characterised* in that** the actuator is linear and consists of an electric ball screw jack actuated by the brushless motor.

3. A load compensating device as claimed in claim 1, ***characterised* in that** the actuator consists of a rotating element of the torque motor type, said motor being of the brushless type and being associated with reducing gear and a connecting rod, said connecting rod cooperating with a linear bar whereof the free end is attached to rope or ropes (6).

4. A load compensating device as claimed in any of claims 1 to 3, ***characterised* in that** it only operates in counterweight mode, the infinitely variable-speed transmission of the brushless motor receiving a particular set point in relation to the force threshold assigned to it and the means suitable for detecting an overload or underload being disabled.

5. A refuelling machine for a nuclear power station comprising a trolley (1) capable of moving on a track (2) located above the reactor core and comprising a lifting appliance consisting of a winch (4) driven by a motor (5) around which one or more hoisting ropes (6) are wound whereof the other end or ends is/are attached to a load compensating device according to one of claims 1 to 4.

## Patentansprüche

1. Lastenausgleichsvorrichtung, insbesondere für Hebezeuge, Mittel umfassend, die dazu geeignet sind, eine Über- oder Unterlast festzustellen, dazu bestimmt, den Antrieb der besagten, einen Aktor (20) umfassenden Vorrichtung zu führen, **dadurch gekennzeichnet, dass** der Aktor (20), an einem der Enden des oder der die Last (11) tragenden Kabel(s) (6) befestigt, und dazu geeignet ist, eine positive oder negative Verlagerung besagter Kabel auf eine, im Hinblick auf die Länge des oder der Kabel(s), geringe Distanz zu erzeugen, mit Hilfe eines bürstenlosen Elektromotors (21) funktioniert, der mit einem Wandler verbunden ist, wobei derselbe an ein Mittel zur Feststellung der Über- oder Unterlast angeschlossen ist.

2. Lastenausgleichsvorrichtung gemäß Anspruch 1, **dadurch gekennzeichnet, dass** der Aktor linear ist und aus einer durch den bürstenlosen Motor angetriebenen elektrischen Winde mit Kugelumlaufspindel besteht.

3. Lastenausgleichsvorrichtung gemäß Anspruch 1, **dadurch gekennzeichnet, dass** der Aktor aus einem rotierenden Element vom Typ Drehmomentmotor besteht, der besagte Motor vom Typ bürstenlos ist mit einem Reduktor und einem Pleuel verbunden, das besagte Pleuel ist verbunden mit einem linearen Arm am freien Ende, an welchem das oder die Kabel (6) befestigt sind.

4. Lastenausgleichsvorrichtung gemäß einem der Ansprüche 1 bis 3, **dadurch gekennzeichnet, dass** sie nur im Gegengewichtmodus funktioniert, indem der Wandler des bürstenlosen Motors eine besondere Anweisung in Verbindung mit der Beanspruchungsschwelle, die ihm zugewiesen wird, erhält, und die Mittel, die geeignet sind, eine Überladung oder eine Unterladung festzustellen, neutralisiert werden.

5. Lademaschine für Kernkraftwerksreaktor, die einen Wagen (1), der geeignet ist, ich auf einer Rollbahn (2), die sich über dem Reaktorkern befindet, zu bewegen, und ein Hebezeug umfasst, das aus einer motorisierten (5) Winde (4) besteht, auf welcher sich eines oder mehrere Hebekabel (6) aufrollen, wobei deren anderes oder die anderen Enden auf einer Lastenausgleichsvorrichtung gemäß einem der Ansprüche 1 bis 4 befestigt ist oder sind.
